Europäisches Patentamt

European Patent Office

Office européen des brevets

(19)

(11) EP 0 533 576 B1

(12) FASCICULE DE BREVET EUROPEEN

(45) Date de publication et mention
de la délivrance du brevet:
20.08.1997  Bulletin 1997/34

(51) Int Cl.⁶: H01M 4/82, H01M 4/64,
H01M 10/40, H01M 6/18

(21) Numéro de dépôt: 92402562.0

(22) Date de dépôt: 17.09.1992

(54) **Procédé de préparation d'ensembles collecteurs-électrodes pour générateurs en films minces, ensembles collecteurs-électrodes et générateurs obtenus**

Verfahren zum Herstellung von Ableiter-Elektrode Einheiten für dünnerschichten Generatoren, Ableiter-Elektrode Einheiten und daraus hergestellte Generatoren

Process for the manufacture of collector-electrode sets for generators in thin films, collector-electrode sets and generators produced therefrom

(84) Etats contractants désignés:
AT BE CH DE DK ES FR GB GR IE IT LI LU MC NL
PT SE

(30) Priorité: 17.09.1991  CA 2051611

(43) Date de publication de la demande:
24.03.1993  Bulletin 1993/12

(73) Titulaire: HYDRO-QUEBEC
Montréal Québec H2Z 1A4 (CA)

(72) Inventeurs:
• Gauthier, Michel
La Prairie, Québec J5R 1E6 (CA)
• St-Amant, Guy
Trois-Rivières-Ouest, Québec G8Y 6N7 (CA)
• Vassort, Guy
Longueuil, Québec J4G 2N8 (CA)

(74) Mandataire: Schrimpf, Robert
Cabinet Regimbeau
26, Avenue Kléber
75116 Paris (FR)

(56) Documents cités:
EP-A- 215 557          US-A- 4 283 844
US-A- 4 477 485        US-A- 4 916 036
US-A- 4 978 601

• PATENT ABSTRACTS OF JAPAN vol. 5, no. 15
(E-43)(687) 29 Janvier 1981

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un procédé rapide, et économique pour produire des ensembles collecteur-électrode constitués d'un support plastique isolant métallisé sur lequel on effectue d'abord le dépôt électrochimique contrôlé d'un métal suffisamment conducteur, que l'on revêt ensuite d'un film d'un matériau d'électrode (anode ou cathode) d'un générateur film-mince. Le métal déposé électrochimiquement est choisi pour sa compatibilité avec le matériau de ladite électrode. Ce procédé permet de préparer des ensembles collecteur-électrode particulièrement bien adaptés pour des générateurs électrochimiques en films minces utilisant des électrolytes polymères. Les modes de réalisation de l'invention permettent notamment d'optimiser les caractéristiques de ces ensembles collecteur-électrode ainsi que les performances et les designs des générateurs. Les avantages principaux des procédés et des dispositifs de l'invention concernent tout particulièrement, l'optimisation de l'épaisseur et de la conductivité du revêtement conducteur, la facilité de manipulation dans des machines des ensembles supportés sur film plastique et le choix des certains designs particulièrement avantageux pour la mise en oeuvre de générateurs en films minces. Ces designs avantageux sont rendus possibles, notamment, grâce au contrôle des surfaces et des formes des revêtements conducteurs sur lesquels les matériaux d'électrode sont appliqués.

On définit collecteur comme représentant métal additionnel qu'on applique sur l'électrode pour drainer les électrons du générateur sans chute ohmique appréciable.

Le développement récent des accumulateurs à électrolyte polymère, notamment ceux à base de lithium, présente des avantages potentiels considérables sur le plan des performances électrochimiques et des technologies de mise en oeuvre. Ces générateurs, entièrement à l'état solide, permettent en principe une vaste gamme d'applications qui englobe les micro-générateurs de l'électronique jusqu'aux gros générateurs destinés au véhicule électrique. Cependant des difficultés technologiques importantes doivent être surmontées afin que l'on puisse optimiser les performances et développer des procédés de fabrication économiques de ce nouveau type de générateur.

Les électrolytes polymères sont, en effet, peu conducteurs en regard des électrolytes liquides organiques présentement utilisés pour les générateurs au lithium primaires ou rechargeables. Ceci a pour conséquence que les cellules électrochimiques doivent être réalisées à partir de films très minces (épaisseur totale de 5 à 200 microns). Des surfaces importantes de films doivent donc être mises en oeuvre pour compenser la faible conductivité des polymères et obtenir les puissances et les énergies stockées voulues.

Dans des travaux antérieurs, la Demanderesse a montré comment on peut réaliser un générateur et ses composantes électrochimiques sous forme de films minces (brevets US 4 517 265, US 4 851 307, US 4 758 483, US 4 824 746, FR 87 08539 et US 4 897 917). Toutefois, lorsque l'on réduit l'épaisseur des composantes électrochimiques actives du générateur (anode, électrolyte et cathode), il importe de réduire, dans la même proportion, les composantes passives (collecteurs et isolants électriques). Sinon, ce qui sera gagné, en puissance ou en performance électrochimique, en augmentant la surface du générateur sera compromis par la perte de contenu d'énergie massique ou volumique, par suite de la proportion prise par les composantes passives. De plus, si la Demanderesse a montré comment les composantes du générateur, peuvent être élaborées rapidement et à bas coût, il en est autrement des collecteurs (et dans une moindre mesure des isolants) présentement disponibles dont le coût devient trop élevé lorsque les épaisseurs requises sont de l'ordre de 10 microns à quelques dixièmes de micron.

Parmi les procédés présentement disponibles pour fabriquer des collecteurs minces de l'ordre de quelques microns, la lamination est la plus courante. Toutefois, peu de métaux sont suffisamment malléables pour être laminés à ces épaisseurs (Au, Sn, Al notamment) et, de façon générale, les coûts augmentent rapidement pour des épaisseurs en-dessous de 50 à 5 microns, en vertu du nombre de passes requises par la lamination, des pertes en matériel, ainsi que des problèmes de recuits et de contamination par les lubrifiants. De plus les épaisseurs commercialement disponibles (12 microns pour l'acier inoxydable, 6-7 microns pour l'aluminium) sont encore excessives et pénalisantes en coût matière et en poids ou volume mort pour la plupart des applications envisagées pour les accumulateurs à électrolytes polymères.

L'électroformage est une technique de placage où le film métallique libre et auto-supporté est obtenu par dépôt électrochimique, à partir d'une solution électrolytique, sur un mandrin conducteur électronique. Les coûts des produits fabriqués s'élèvent à environ 7702 FRF/m2 (US$ 1/INCH$^2$) et les épaisseurs minimales disponibles sont de 6 microns pour le nickel et de 10 microns pour le cuivre. Cette technique est applicable à certains matériaux seulement et, la nécessité de peler et de manipuler un film libre après le dépôt impose des épaisseurs minimum sous peine de perdre toute tenue mécanique. Ces films sont couramment utilisés comme feuillards conducteurs soudables dans la fabrication des circuits imprimés.

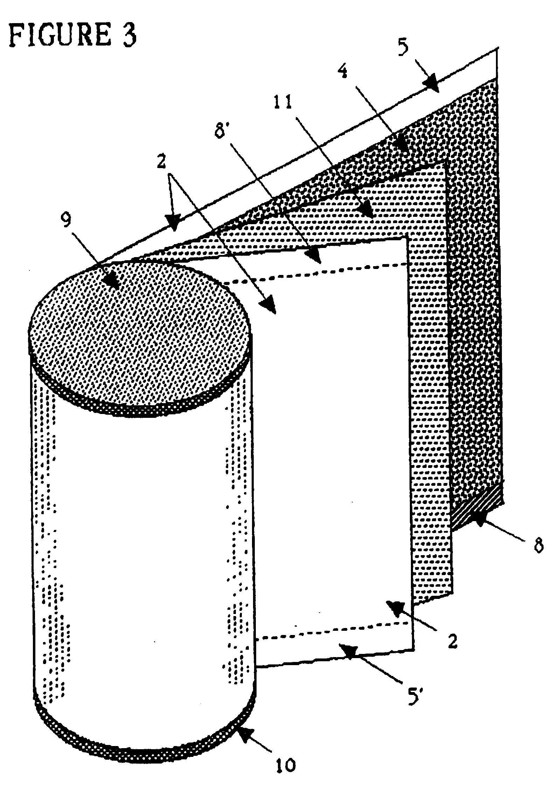

Le tableau I illustre l'importance que peuvent prendre le poids et l'épaisseur des collecteurs de courant pour des générateurs à électrolytes polymères en films minces. La comparaison est faite, à titre d'exemple, sur la base d'une pile de formal AA dont le volume utile est fixé à 6,6 cm$^3$. La pile est constituée des éléments suivants sous forme de films co-enroulés en spirale: Li/électrolyte polymère/TiS$_2$/collecteur (Al ou Ni)/film isolant polypropylène (PP) tel qu'illustré à la FIGURE 3. Ce tableau est basé sur des composantes passives (films collecteur et isolant) choisies parmi des produits présentement disponibles commercialement (Al 12μm, Ni 7μm, PP 5μm) et sur deux formulations de piles à électrolytes polymères typiques de la technologie en développement dont l'épaisseur totale des composantes électrochimiques, Li/électrolyte polymère/TiS$_2$, est fixée respectivement à 56 et à 180 μm.

TABLEAU 1

| Epaisseurs des composantes électrochimiques Li/électrolyte polymère/TiS$_2$ | | | |
|---|---|---|---|
| 56 microns total | | 180 microns total | |
| Epaisseurs des composantes passives | | | |
| Al 12 μm/PP 5 μm | Ni 7 μm/PP 5 μm | Al 12 μm/PP 5 μm | Ni 7 μm/PP 5 μm |
| Wh/l 220 | 236 | 260 | 267 |
| Wh/Kg 140 | 111 | 160 | 160 |

On constate dans ce tableau que les composantes passives (collecteurs/isolants) présentement disponibles deviennent très pénalisantes pour les caractéristiques électrochimiques d'un générateur (Wh/l, Wh/Kg) à électrolyte polymère lorsque ce dernier est élaboré sous forme mince, i.e. lorsque l'épaisseur totale des composantes électrochimiques actives diminue. Ces pénalités résultent de l'excès de volume et de poids du métal conducteur installé. Ces valeurs sont données pour aider à caractériser l'art antérieur uniquement; les épaisseurs de 56 à 180 microns sont choisies arbitrairement. Pour des épaisseurs de piles inférieures à ces valeurs, des pénalités encore plus importantes sont prévisibles. De plus, à titre indicatif, le coût du feuillard de Ni électroformé 7702 FRF/m² (1US$/INCH²) utilisé dans les cellules du tableau 1 représenterait à lui seul de 1,987 FRF ($ 0.40) à 5,465 FRF ($1,10) par pile AA. Un tel coût est inacceptable commercialement pour ce type de pile de consommation. Le coût de l'aluminium dans ces conditions est moindre, mais ce métal est pénalisant sur le plan de l'énergie volumique et limite les designs des générateurs possibles parce qu'instable en présence du lithium et ses alliages.

Il est connu, par ailleurs, que ces films plastiques diélectriques métallisés peuvent être utilisés comme des électrodes dans des condensateurs électrostatiques, voir par exemple, brevets européen numéro 0 073 555 et français 2 637 118. Les métaux généralement déposés sur plastique sont dans ce cas, l'aluminium, le zinc et leurs alliages. Ces métallisations sont généralement obtenues, sous vide, par évaporation thermique ou par d'autres procédés d'évaporation assistés: projection cathodique ou par faisceau d'électrons. Les épaisseurs ainsi obtenues sont cependant très faibles, typiquement 100-500Å et les résistivités par surface carrée sont par conséquent très élevées, 1-100 Ω. Outre le fait que les métaux connus et déposés ne sont pas stables chimiquement avec l'anode des générateurs à électrolyte polymère, les conductivités de surface ainsi obtenues ne sont pas suffisantes pour permettre le drainage des gammes de courants prévus pour les générateurs de moyennes et de fortes tailles. Les procédés de métallisation sous vide sont connus pour être limités à des épaisseurs inférieures à environ 1000Å (0,1μ). A ces épaisseurs, le procédé de métallisation devient lent et coûteux et les dépôts obtenus sont de moins bonne qualité. Ces électrodes de condensateur électrostatique ne sont donc pas applicables comme collecteur dans la plupart des générateurs au lithium à électrolyte polymère, sauf que peut être dans le cas de la métallisation d'aluminium appliquée à une électrode positive dans des accumulateurs de très faibles dimensions, fonctionnant à 25°C et où les densités de courants moyens sont faibles et les distances latérales à collecter sont faibles (voir l'équation 1, ci-après).

Il existe donc une gamme d'épaisseurs critiques se situant entre 5 et 0,1 microns pour laquelle il n'existe pratiquement pas, présentement, de collecteurs adéquats pour la technologie des accumulateurs au lithium à électrolytes polymères. La présente invention concerne des collecteurs de courant dont la gamme possible des épaisseurs correspond à ce besoin précis.

L'invention consiste en un procédé rapide de fabrication d'ensembles constitués, d'un collecteur métallique obtenu par métallisation-placage electrochimique supporté sur un film plastique isolant et d'un revêtement d'un matériau d'électrode d'un générateur comprenant les étapes principales suivantes:

- métallisation rapide sous vide d'un métal mince, particulièrement favorable au dépôt électrochimique d'un second métal, sur au moins une partie de la surface d'au moins une des faces du film support isolant,
- dépôt électrochimique rapide d'un second métal sur la surface conductrice métallisée, de façon à optimiser la résistance de surface du collecteur,
- application d'un revêtement adhérent consistant en une des électrodes du générateur sur au moins une partie de la surface du collecteur supporté.

Plus précisément, l'invention se rapporte à un procédé de préparation d'un ensemble collecteur-électrode, à collection latérale, facile à manipuler et destiné à un générateur électrochimique à électrolyte polymère utilisant des électrodes fonctionnant par rapport aux ions alcalins ou alcalino-terreux, comprenant les étapes suivantes :

- métallisation par dépôt sous vide, d'au moins un métal, sur au moins une face d'un film support isolant en résine synthétique, l'épaisseur du métal étant réglée entre environ 0,005 et 0,1 micron afin de donner un film métallisé offrant une conductivité électronique suffisante pour amorcer un dépôt électrochimique uniforme ;
- dépôt électrochimique, d'au moins une couche métallique additionnelle, d'épaisseur totale comprise entre 0,1 et 4 microns, sur au moins une partie de la surface du film métallisé de façon à constituer un conducteur métallisé-plaqué, le métal de la couche métallique additionnelle déposée étant choisi pour sa compatibilité avec l'électrode correspondante du générateur ;
- application d'un revêtement d'une électrode du générateur sur au moins une partie de la surface du collecteur supporté ainsi constitué de façon à assurer l'adhésion du matériau de l'électrode au film collecteur supporté.

La métallisation par dépôt sous vide ainsi que le dépôt électrochimique peuvent s'effectuer en continu.

Le procédé de métallisation sous vide est préférentiellement choisi parmi les procédés de vaporisation thermochimiques simples, ou assités, notamment par pulvérisation cathodique ou à faisceau d'électrons.

De préférence, le film support isolant est une résine synthétique choisie pour sa compatibilité avec l'environnement d'un générateur comportant des électrodes fonctionnant par rapport aux ions alcalins ou alcalino-terreux et dont l'épaisseur varie entre 1 et 30 microns. La résine synthétique est notamment à base de polypropylène, de polyester, de polysulfone ou de polyéthylène, de préférence de polypropylène ou de polyéthylène. La métallisation s'effectue habituellement avec des éléments compatibles avec le dépôt électrochimique, choisis parmi, le cuivre, le nickel, le fer, le mobybdène, le chrome, le carbone, le zinc, l'argent, l'or ou leurs alliages, et la résistance par surface carrée desdits éléments et est fixé par exemple entre 0,1 et 10 Ω. L'élément métallisé est de préférence un métal choisi parmi le cuivre, l'or ou l'argent ou leurs alliages. Le métal déposé électrochimiquement est de préférences le nickel, le fer, le chrome, le molybdène ou leurs alliages. Le film métallisé recouvert d'un dépôt électrochimique métallique peut ne recouvrir que partiellement la surface du film support isolant de façon à laisser une marge non-conductrice latérale représentant moins de 10% de la largeur du film support isolant. Ce recouvrement partiel du film isolant par un revêtement conducteur métallisé-plaqué peut être obtenu par des procédés choisis parmi l'utilisation de masques latéraux lors de la métallisation, ou encore par des procédés basés sur l'ablation du revêtement conducteur métallisé ou métallisé-plaqué, par exemple par usinage laser, par étincellage, par voie chimique ou mécanique.

On peut interrompre périodiquement le revêtement conducteur métallisé-plaqué dans le sens transversal du film par des bandes non-conductrices, lesquelles peuvent être obtenues par ablation locale des couches conductrices métallisées ou métallisées-plaquées avant l'étape d'application d'un revêtement d'électrode, au moyen de procédés laser, d'étincellage ou par voie chimique ou mécanique.

Le matériau d'électrode appliqué sur le collecteur supporté est de préférence le lithium ou une anode à base de lithium. Cette application du revêtement de lithium peut être effectuée par des procédés de lamination ou de pressage d'un film de lithium ou encore par projection ou mouillage par du lithium fondu. Le matériau d'électrode appliqué sur le collecteur supporté est de préférence une cathode ou une anode composite liée par l'électrolyte polymère du générateur. L'application du revêtement de la cathode ou de l'anode composite peut aussi être obtenue par les prodécés d'épandage sous forme de solution ou de produit fondu ou encore par un procédé de transfert d'un film adhésif d'une cathode ou d'une anode déjà élaborée. Le revêtement d'électrode, de préférence, recouvre incomplètement la marge non-conductrice latérale du film support isolant. Le revêtement d'électrode peut aussi être appliqué de façon à recouvrir incomplètement la surface du collecteur métallisé-plaqué afin de définir une marge conductrice latérale permettant l'application d'une prise de contact latérale au bord de la métallisation-placage plutôt que sur le revêtement du matériau d'électrode lui-même.

Selon une réalisation alternative de l'invention, on interrompt le conducteur métallisé transversalement par des sections non conductrices obtenues par une démétallisation locale de la bande métallisée avant l'étape de dépôt électrochimique, la démétallisation étant obtenue par ablation du dépôt métallisé. On peut aussi traiter le revêtement conducteur total en l'interrompant transversalement par des sections non-conductrices obtenues par une ablation des dépôts métalliques avant l'étape d'application du revêtement d'électrode, la démétallisation étant obtenue par ablation des dépôts métalliques par usinage au laser, par étincellage, par voie chimique ou mécanique.

L'invention concerne aussi un ensemble collecteurs-électrode, à collection latérale, adapté aux générateurs électrochimiques films minces à électrolyte polymère et à leurs modes d'assemblages, comprenant les éléments suivants:

- un film support isolant en résine synthétique, d'épaisseur comprise entre 1 et 30 microns comprenant un dépôt métallisé obtenu par dépôt sous vide, sur au moins une face du support et sur au moins une partie de sa surface, dont l'épaisseur métallisée varie entre 0,005 et 0,1 micron et est caractérisée par une résistance par surface carrée inférieure de 10 $\Omega$ ;
- un dépôt électrochimique d'au moins un métal, d'épaisseur totale comprise entre 0,1 et 4 microns, sur la totalité ou une partie de la surface ainsi métallisée dont la résistance électrique par surface carrée est inférieure à 1 $\Omega$, caractérisé en ce que le dernier métal déposé est choisi pour sa compatibilité avec l'électrode correspondante du générateur ;
- revêtement d'un matériau d'électrode adhésif au collecteur et au film support consistant en une anode ou une cathode du générateur dont l'épaisseur est comprise entre 1 et 200 microns.

Le film métallisé comporte de préférence une marge-non-conductrice latérale, représentant moins de 10% de la largeur du support, sur un bord opposé à un bord utilisé pour établir un contact de sortie du film métallisé. Le revêtement conducteur métallisé plaqué peut être interrompu périodiquement dans le sens transversal du film par des bandes non-conductrices.

Selon une réalisation préférée, l'électrode ne recouvre pas la marge non-conductrice latérale du film. D'autre part le film métallisé recouvert d'un dépôt électrochimique peut comporter une marge conductrice latérale permettant l'application d'une prise de contact latérale indirecte sur le dépôt métallisé-plaqué plutôt que sur le revêtement du matériau d'électrode lui-même. Le revêtement d'un matériau d'électrode peut être interrompu transversalement par des sections non-recouvertes localisées au niveau des sections non-conductrices du revêtement conducteur.

Selon une autre réalisation préférée de l'invention, le support isolant peut être recouvert sur chaque face d'un revêtement conducteur et d'un revêtement d'électrode de même nature et superposés de façon identique sur chaque face de façon à constituer un seul ensemble collecteur-électrode central biface lorsqu'un métal conducteur, notamment le zinc est appliqué sur les tranches latérales conductrices des deux ensembles collecteur-électrode supportés.

Selon une autre réalisation, l'invention concerne un collecteur-électrode constitué par une paire de collecteurs-électrodes supportés sur un même film support isolant comportant sur une face un ensemble collecteur-anode et sur l'autre face un ensemble collecteur-cathode disposés de façon à ce que leurs marges non-conductrices soient en opposition à chaque bord du film support et à permettre éventuellement une prise de contact électrique latérale des ensembles à leurs extrémités latérales conductrices.

L'invention concerne aussi un générateur au lithium à électrolyte polymère comportant au moins un ensemble collecteur-électrode décrit ci-dessus et assemblé sous forme d'empilement ou d'enroulements plats ou cylindrique.

Selon une autre réalisation, l'invention concerne un générateur à électrolyte polymère sous forme d'un ensemble adhérent de films minces successifs caractérisé en ce que les deux faces externes dudit générateur correspondent aux supports isolants d'ensembles collecteur-anode et collecteur-cathode tels que décrit ci-dessus, ces ensembles étant placés de façon à ce que les contacts latéraux puissent se faire aux extrémités latérales opposées du générateur. Ce dernier est produit et stocké sous forme d'enroulements temporaires et manipulés sans risque de court-circuit, les deux faces externes étant constituées de films isolants. Les contacts électriques externes sont constitués d'addition de métal aux extrémités latérales de l'ensemble une fois ce dernier enroulé ou empilé dans sa forme définitive. Le générateur peut comporter du côté de l'extrémité conductrice de l'ensemble collecteur-électrode un métal d'addition, notamment le zinc ou ses alliages appliqué par pulvérisation ou sous forme de pâte conductrice.

Selon une autre réalisation alternative, l'invention concerne un générateur au lithium à électrolyte polymère comportant au moins un ensemble collecteur-électrode tel que décrit ci-dessus assemblé en repliant en zig-zag l'ensemble des films du générateur de façon à ce que les zones non-conductrices transversales du collecteur coincident avec les zones de pliages afin d'améliorer la fiabilité et les performances du générateur.

L'invention comporte plusieurs caractéristiques importantes:

Elle utilise la métallisation rapide sous vide d'un film support isolant pour fixer les surfaces qui deviendront conductrices et pour faciliter le dépôt électrochimique ultérieur.

Le placage électrochimique effectué sur la métallisation permet d'optimiser la résistivité et l'état de surface du collecteur et de choisir un métal compatible avec le revêtement de l'électrode correspondante.

L'étape de dépôt électrochimique est facilitée par la nature et la pureté du dépôt métallisé; de plus la surface plaquée électrochimiquement peut être contrôlée en modifiant la surface finale de la métallisation, ou du dépôt électrochimique final par ablation d'une partie de la surface conductrice, par exemple par ablation avec un faisceau laser. Puisque le film électrodéposé demeure supporté sur le film isolant, son épaisseur peut être considérablement réduite. Ceci permet d'augmenter la vitesse du procédé de dépôt bien au-delà des vitesses atteintes par les procédés conventionnels d'électroformage de feuillards libres.

La présence d'un support plastique isolant, compatible avec l'ensemble du générateur, facilite la manipulation du collecteur et de l'ensemble collecteur-électrode. Ce support isolant peut être choisi de façon à assurer l'adhésion du revêtement métallique et à faciliter l'élaboration d'ensembles collecteur-électrode et les étapes ultérieures d'assemblage du générateur complet. Finalement, le support plastique de ces ensembles est ainsi mis à profit en tant qu'isolant électrique dans certains designs de générateurs.

Les étapes de métallisation et placage sur film isolant permettent donc d'optimiser la densité d'énergie en éliminant l'excès de poids et de volume des composantes passives (collecteurs et isolants) du générateur et de réduire également les coûts matières et des procédés de mise en oeuvre.

Les collecteurs de courants de la présente invention sont destinés à des assemblages par enroulement ou empilement de films, et mettent en jeu, de façon préférentielle, des collecteurs à marges latérales isolante et conductrice, de façon à pouvoir appliquer des contacts métalliques aux extrémités des assemblages.

La possibilité de contrôler facilement et en continu les formes et les surfaces des revêtements conducteurs des films supports isolants permet de réaliser facilement des ensembles collecteur-électrode ainsi que des assemblages de générateurs, permanents ou temporaires, particulièrement performants et fiables sur le plan des performances électrochimiques.

L'invention a pour objet des ensembles collecteur-électrode dont le collecteur de courant est optimisé en fonction des besoins précis de l'électrode correspondante et du générateurs à électrolyte polymère, notamment au niveau du contrôle des excès de métaux conducteurs utilisés comme collecteurs, de la nature des métaux mis en contact avec les électrodes, du contrôle des surfaces métallisées et des films d'électrodes supportées par un film mince isolant qui facilite la manipulation de l'ensemble collecteur-électrode et l'assemblage du générateur.

L'invention sera mieux comprise et d'autres avantages apparaîtront au moyen de la description qui suit des réalisations préférées et des figures suivantes, dans lesquelles:

La FIGURE 1 est une vue du dessus d'un ensemble collecteur-électrode typique de l'invention;
La FIGURE 2 est une vue en coupe du même ensemble;
La FIGURE 3 est une vue en perspective d'un générateur sous forme d'enroulement cylindrique comportant deux ensembles collecteur-électrode selon l'invention ainsi qu'un film d'électrode;
La FIGURE 4 est une représentation schématique d'un ensemble collecteur-cathode assemblé en zig-zag;
la FIGURE 5 illustre deux ensembles collecteur-électrode selon l'invention montés sur les deux faces d'un même film support; et
la FIGURE 6 est une vue semblable à la FIGURE 5, où les deux collecteurs sont placés de façon symétrique de part et d'autre du film support.

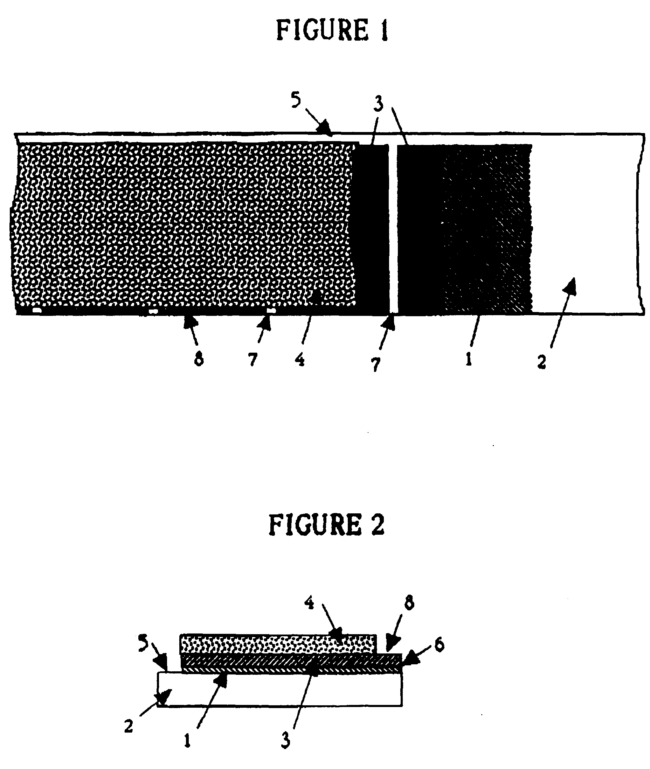

Les FIGURES 1 et 2 représentent des vues de dessus et en coupe d'un ensemble collecteur-électrode typique de l'invention. Ces figures et les suivantes ne respectent pas les proportions réelles des éléments, afin d'en faciliter la compréhension. L'ensemble est constitué d'un film plastique support isolant 2 recouvert sur au moins une face et sur au moins une partie de sa surface d'un film métallique 1, obtenu par métallisation sous vide, choisi pour faciliter une étape ultérieure de placage électrochimique et possédant une conductivité de surface suffisante pour pouvoir amorcer le placage. L'épaisseur de ce film métallisé est généralement de l'ordre de quelques centaines d'Amstrongs.

Cette métallisation est ensuite recouverte d'un dépôt électrochimique d'au moins un métal dont le dernier est choisi pour sa compatibilité avec le matériau d'électrode correspondant. L'épaisseur de ce dépôt électrodéposé 3 est généralement comprises entre 0,1 et 4 microns et est réglée de façon à permettre la collection latérale des électrons de l'électrode du générateur. En principe, l'épaisseur est ajustée de façon à ce que la résistivité de surface exprimée en $\Omega$ par surface carrée, soit suffisamment faible pour éviter un chute appréciable de la tension du générateur lors de son fonctionnement à des densités de courant maximales en utilisation normale, $I_{max.}/cm^2$. L'équation 1 suivante relie les principaux paramètres qui guident le choix de la résistivité de surface optimale d'un collecteur à prise de courant latérale.

$$\Delta V = (I/cm^2)\,(\Omega/\square)\,L^2/2 \tag{1}$$

où, $\Delta V$ est la chute de voltage admissible pour le film collecteur, I/cm$^2$ est la densité de courant maximale d'utilisation normale, $\Omega/\square$ la résistivité de surface du collecteur de courant et L la profondeur d'électrode à drainer, par exemple, la largeur en centimètres du film collecteur. La chute de voltage admissible peut varier selon le type d'application envisagée, toutefois, dans la majorité des cas, cette chute ohmique doit demeurer inférieure à quelques pourcents de la tension du générateur. Même si cette relation peut servir à optimiser les collecteurs de l'invention, il va de soi, pour l'homme de l'art, que d'autres paramètres peuvent entrer en considération dans le choix des épaisseurs des films déposés. C'est le cas notamment des paramètres de la gestion thermique du générateur qui peuvent amener une augmentation de l'épaisseur des collecteurs, ou encore, une optimisation fine de la résistivité des collecteurs pour tenir compte de l'accroissement des courants à drainer lorsque l'on se rapproche de l'extrémité du collecteur où s'effectue la collection latérale. L'invention permet d'ajuster les caractéristiques des ensembles collecteurs à ces divers besoins.

A titre d'exemple, le Tableau 2 illustre le gain résultant de l'utilisation des connecteurs de l'invention dans des conditions équivalentes à celles décrites au Tableau 1 pour une pile de type AA. Dans ce cas les composantes passibles du générateur sont: le film support PP 5 µm, une métallisation d'environ 400 Å de cuivre et un dépôt de nickel de 1 micron.


TABLEAU 2

| Epaisseurs des composantes électrochimiques Li/électrolyte polymère/TiS$_2$ | |
|---|---|
| 56 microns total | 180 microns total |
| Epaisseurs des composantes passives | |
| PP 5 $_{µm}$+ 1 $_{µm}$(métallisation + placage) | |
| Wh/l    256 | 276 |
| Wh/Kg    192 | 201 |


On constate, en comparaison avec le Tableau 1, le gain important résultant des collecteurs de l'invention lorsqu'utilisés avec le générateur Li/TiS$_2$, plus particulièrement lorsque l'épaisseur des composantes électro-chimiques du générateur est de 56 microns. Toujours pour le même exemple, le coût projeté pour les supports collecteurs de l'invention est estimé à quelques cents au plus, sur la base du coût actuel des films plastiques métallisés et en tenant compte de la vitesse prévue pour l'étape de dépôt électrochimique.

Les étapes caractéristiques du procédé de l'invention sont les suivantes:

1- la métallisation 1 sous vide d'au moins une partie de la surface d'un film support isolant 2 de façon à permettre le dépôt électrochimique ultérieur;
2- le dépôt électrochimique 3 (placage) d'au moins un métal conducteur dont le dernier est choisi pour sa compatibilité avec l'électrode correspondante;
3- l'ablation d'une partie de la surface conductrice pour contrôler la géométrie de la surface conductrice supportée par le film isolant 2;
4- l'application d'un revêtement adhésif d'un matériau d'électrode 4 sur le collecteur supporté de façon à recouvrir au moins une partie de la surface conductrice.

Ces étapes sont préférentiellement effectuées en continu, toutefois selon les modes de fabrication utilisés pour l'assemblage des générateurs complets, ces étapes peuvent être effectuées séparément et à des moments différents. L'ordre des étapes 2 et 3 peut être inversé pour optimiser certains modes de réalisation du procédé et dans certains cas l'étape d'ablation d'une partie de la surface conductrice n'est pas requise.

Des modes privilégiés de mise en oeuvre de l'invention sont illustrés sur les Figures 1 à 6. Une variante avantageuse de l'invention consiste notamment à prévoir lors des étapes de métallisation-placage une marge latérale non-conductive 5 et une marge latérale conductrice 8 s'étendant jusqu'à l'extrémité opposée de l'ensemble collecteur-électrode, de façon à faciliter les prises de courant 9 et 10 aux extrémités latérales des assemblages plats ou enroulés. Ce désign illustré à la FIGURE 3 dans le cas d'un générateur sous forme d'enroulement cylindrique comportant deux ensembles collecteur-électrode et un film d'électrolyte 11 représentés schématiquement 8' et 5' représente la position des marges conductrices et isolantes du second ensemble collecteur-électrode vu de dos. Ce type de design est facile à mettre en oeuvre à partir des procédés de l'invention et permet de simplifier grandement les procédures d'assemblage et de prise de contacts des générateurs. Les marges non-conductrices peuvent être réalisées de diverses façons soit par des techniques de caches locales lors de la métallisation, soit encore par des techniques d'ablation de la surface métallisée ou de la surface métallisée-plaquée, telles que les techniques par faisceaux laser, l'étincellage, l'abrasion ou l'attaque chimique locale. Pour ce mode de réalisation les revêtements d'électrodes sont effectués de façon à ne pas recouvrir complètement la marge latérale non-conductrice 5 et 5' ainsi qu'une partie des marges conductrices 8 et 8' de façon à permettre, dans ce dernier cas, un contact direct entre le métal du contact latéral 9, (e.g. un dépôt de Zn obtenu par projection à la flamme ou schoopage), et la surface métallisée-plaquée 1,3.

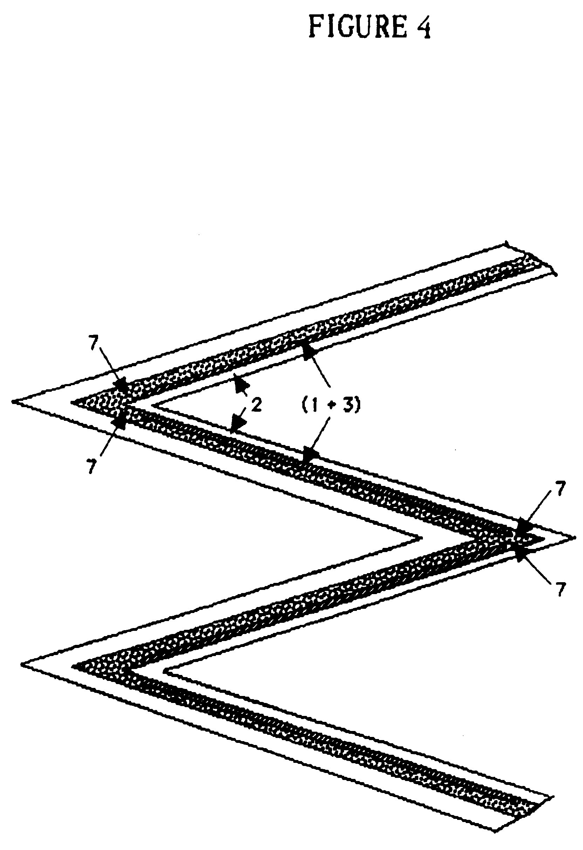

Une façon de réaliser un ensemble collecteur-cathode particulier est illustré de façon schématique dans le cas d'un assemblage en zig-zag, à la FIGURE 4. Dans cet ensemble, la surface conductrice du collecteur est divisée transversalement par des sections non-conductrices 7, également représentées à la FIGURE 1, obtenues par ablation locale du revêtement conducteur métallique avant l'application du revêtement d'électrode constitué d'une cathode composite. La suppression du conducteur métallique sous le revêtement de la cathode composite réduit localement l'activité électrochimique (densité de courant) et permet de mettre à profit ces sections transversales pour plier l'ensemble électrochimique Li/électrolyte polymère/cathode-collecteur lors d'assemblages en zig-zag ou d'enroulements plats, sans risques de créer des points faibles défavorables aux propriétés de cyclage ou à la fiabilité du générateur.

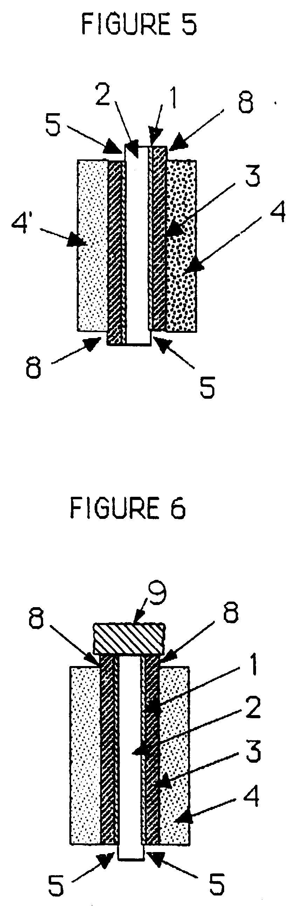

Deux autres modes d'utilisation particulièrement intéressants des ensembles collecteur-électrode de l'invention adaptés à des générateurs à électrolytes polymères sont décrits brièvement aux Figures 5 et 6. Dans ces cas, les deux faces du support isolant sont traitées selon les procédés décrits pour réaliser deux ensembles collecteur-électrode distincts, l'un sur chaque face du film support. Dans le premier cas illustré en FIGURE 5, le film isolant 2 est recouvert sur ses deux faces d'un collecteur 1, 3 dont les marges non-conductrices 5 sont placées en opposition sur chaque face du support. Dans ce cas particulier, les revêtements d'électrodes appliqués sont de natures différentes (anode et cathode) et il va de soi que les dépôts métalliques sont choisis en conséquence. Ce désign est particulièrement avantageux pour simplifier certains types d'assemblages tels que les petits enroulements cylindriques ou plats et pour optimiser les densités d'énergie stockées par la réduction de la proportion prise par les composantes passives du générateur.

Dans le second cas, illustré à la FIGURE 6, les deux collecteurs sont placés de façon symétrique de part et d'autre du film support isolant de façon à constituer un seul collecteur biface lorsqu'un dépôt conducteur 9 (c.a.d. Zn) sera appliqué sur l'extrémité latérale de l'ensemble collecteur-électrode. Ce type de réalisation est particulièrement avantageux lorsque le revêtement d'électrode appliqué est un film mince de lithium. Dans ce cas, l'ensemble collecteur-électrode de lithium sera beaucoup plus facile de manipulation qu'un simple film de lithium d'épaisseur équivalente. De plus si le revêtement de lithium ne couvre pas toute la marge latérale conductrice 8, il est alors possible d'établir un contact entre la surface conductrice et le métal de collection appliqué à l'extrémité latérale tel que le zinc, sans que ce dernier ne soit en contact direct avec le lithium réactif.

Les exemples suivants illustrent divers modes de réalisation préférées, et sont donnés sans caractère limitatif. Les formulations des électrodes, des électrolytes polymères ainsi que leurs procédés de préparation sont décrits dans les brevets antérieurs mentionnés ci-haut.

## EXEMPLE 1

Cet exemple décrit un procédé de réalisation pratique, en trois étapes, d'un ensemble collecteur-électrode destiné à un générateur à électrolyte polymère également représenté de façon très générale à la FIGURE 1.

L'étape 1 consiste à métalliser en continu un film de polypropylène de 23 microns d'épaisseur et de 10 cm de largeur préalablement traité par décharge par effet couronne. Du cuivre est métallisé par évaporation thermique sous vide. Ce métal est choisi pour sa bonne conductivité et parce qu'il constitue un substrat de choix pour l'étape de placage ultérieure. L'épaisseur de la métallisation obtenue est uniforme et d'environ 500 Å et sa résistivité par surface carrée est de 0,5 $\Omega$.

L'étape 2 consiste à plaquer électrochimiquement en continu la surface du cuivre métallisée avec du nickel. Le dépôt électrochimique est effectué à partir d'une solution connue de sulfamate de nickel, dans un bain à 40°C.

Le placage électrochimique de films de nickel dont les épaisseurs varient entre 0,3 à 3 microns est vérifié. L'aspect des dépôts de nickel obtenus est brillant pour des épaisseurs inférieures à 0,8 micron et prend un fini mat, caractéristique des bains de sulfamate normaux lorsque les épaisseurs sont de quelques microns. Un film comportant un dépôt de nickel de 0,3 micron est produit de cette façon à une densité de courant de 0,08 Ampère/cm$^2$ et à une vitesse de placage d'environ 2 m/min. Le film ainsi obtenu adhère à son support et l'ensemble PP/Cu/Ni peut être plié plusieurs fois sans dommage sur un rayon de 2 mm. L'adhésion entre le cuivre et le film plastique est donc suffisante pour les besoins du procédé, toutefois cette dernière pourrait encore au besoin être améliorée considérablement par l'usage d'autres films supports plus polaires, tels que le polyester. La résistivité par surface carrée mesurée pour ce film est inférieure à 0,1 Ω. Ces valeurs ne correspondent pas, bien entendu, à une optimisation du procédé, toutefois elles illustrent bien l'intérêt d'un placage électrochimique réalisé sur un dépôt métallisé sous vide compte-tenu de la propreté chimique de ce dernier (surface de cuivre non-oxydée et absence de contaminants).

L'étape 3 consiste à appliquer un revêtement d'électrode sur la surface du nickel supporté sur l'isolant. Dans cet exemple, une cathode composite à base de TiS$_2$, de noir d'acétylène et de polyéther linéaire principalement à base d'oxyde d'éthylène est épandu à partir d'une solution d'acétonitrile et séchée par la suite pour éliminer le solvant. De cette façon un revêtement adhérent dont la capacité électrochimique est de 1,5C/cm$^2$ est obtenu de façon à constituer un ensemble collecteur-électrode aisément manipulable lors des étapes ultérieures d'assemblage du générateur.

EXEMPLE 2

Cet exemple est semblable à l'exemple 1, dans lequel après l'étape de métallisation, on démétallise par ablation mécanique de façon à contrôler la surface du placage de l'étape 2. L'ablation consiste à enlever, par grattage, la métallisation de cuivre sur des sections transversales de 0,5 cm de largeur de façon à séparer la bande conductrice en bandes indépendantes. Ce mode d'ablation a été choisi pour sa simplicité de mise en oeuvre en laboratoire. Le placage électrochimique est ensuite effectué de façon à obtenir un dépôt de nickel de 0,3 micron. On constate que le placage s'effectue uniquement sur les surfaces cuivrées. L'étape 3 d'application d'un revêtement d'électrode TiS$_2$ conduit dans ce cas, à un film continu adhérent aux surfaces conductrices ainsi qu'aux bandes non-conductrices transversales 7 de la FIGURE 1. Cet exemple illustre la possibilité de supprimer localement le collecteur électronique sous le revêtement d'électrode de façon à réaliser des sections non-conductrices 7 et à réduire considérablement l'activité électrochimique dans certaines sections des ensembles supportés collecteur-électrode. Cette liberté facilite grandement la réalisation des générateurs assemblés et en améliore la fiabilité lorsque des opérations de pliage de la pile à électrolyte polymère sont requises, par exemple dans des assemblages en zig-zag de la FIGURE 4. Cet ensemble collecteur-électrode sera utilisé pour l'exemple 7.

EXEMPLE 3

Cet exemple illustre une façon privilégiée de réaliser l'étape de démétallisation d'une partie de la surface conductrice d'un collecteur supporté. Il s'agit, de fait, d'une alternative à l'ablation mécanique décrite à l'exemple 2. La technique utilisée est basée sur une ablation par faisceau laser; les conditions suivantes sont utilisées: laser CO$_2$, pulses de 200 nanosecondes, longueur d'onde 10,6 μ et surface ponctuelle démétallisée de 3 à 10 mm$^2$. Deux types d'essais ont été effectués, l'un sur la démétallisation au laser du film de polypropylène métallisé au cuivre (500Å) de l'exemple 1 et l'autre, sur le film de polypropylène métallisé (Cu) et plaqué (Ni, 0,3μm) également réalisé pour l'exemple 1. Dans les deux cas on a démontré que les revêtements métalliques peuvent être enlevés rapidement par laser sans affecter le support de polypropylène. La délimitation de la surface démétallisée est excellente (±1 micron). L'intérêt de cet exemple est de confirmer la possibilité de démétalliser rapidement par faisceau laser immédiatement après l'étape de métallisation ou encore, lorsque les dépôts plaqués ne sont pas trop épais, après l'étape du dépôt électrochimique. Cette technique de démétallisation permet donc de réaliser aisément les géométries de collecteurs illustrés aux FIGURES 1 et 4.

EXEMPLE 4

Cet exemple démontre le fonctionnement en pile des collecteurs de l'invention dans le cas de l'ensemble collecteur-cathode réalisé à l'exemple 1. L'ensemble PP/Cu/Ni/électrode composite TiS$_2$ est utilisé pour l'assemblage d'un générateur complet. Ce dernier est réalisé par transferts successifs, à 75°C, d'un film d'électrolyte de 20 microns et d'un film de lithium 15μm laminé sur nickel 7 μm. L'électrolyte est un polyéther de l'oxyde d'éthylène contenant un sel de lithium (CF$_3$SO$_2$)$_2$NLi dans le rapport 18/l. La surface du générateur est de 4cm$^2$. Ce générateur est ensuite mis en cyclage à 60°C, pour accélérer les phénomènes de vieillissement après plus de 100 cycles de décharge/charge, à

300 et 200 μA/cm$^2$ et des limites de voltage de 2,9 et 1,4V. Aucune différence de comportement n'est observé en termes de taux d'utilisation des matériaux d'électrode, 85% au cycle 2 versus 70% au cycle 100 ou de la résistance interne de la pile en comparaison avec une pile identique dont la cathode est élaborée sur un feuillard de nickel électroformé de 7 microns d'épaisseur. Cet exemple démontre la compatibilité électrochimique et chimique des composantes passives (PP, Cu, Ni) de cet ensemble collecteur-électrode réalisé selon l'invention et la possibilité de réduire au micron et moins l'épaisseur des métaux utilisés comme collecteurs latéraux de façon à optimiser le contenu d'énergie des générateurs à électrolytes polymères conformément aux hypothèses du précédent tableau 2.

EXEMPLE 5

Cet exemple démontre le fonctionnement en pile des ensembles collecteur-électrode de l'invention lorsque le collecteur est associé à une électrode de lithium de 20 microns appliquée par lamination. L'ensemble est réalisé en laminant à froid un film de lithium sur le collecteur réalisé pour l'exemple 1: PP/Cu,500Å/Ni, 0,3μm. Une partie de la surface conductrice supportée est laissée non recouverte de lithium de façon à faciliter une prise de courant latérale directement sur la surface conductrice.

Deux piles sont assemblées à partir ce cet ensemble collecteur/anode de lithium. L'une comportant une cathode de TiS$_2$, 1,5C/cm$^2$, est cyclée à 25°C sur plus de 50 cycles à des courants de décharge/charge de 80 et 60 μA; l'autre, comportant une cathode à base d'oxyde de vanadium, 4,0C/cm$^2$, est cyclée à 60°C sur plus de 100 cycles à des courants de décharge/charge de 300 et 200 μA/cm$^2$. Dans les deux cas, aucune perte de contact électrique n'est observée entre le lithium de l'électrode et le collecteur supporté et les performances obtenues, en puissance, taux d'utilisation et résistance interne, correspondent à celles de piles utilisant du lithium libre ou laminé sur support de nickel 7μm. Au démontage, après cyclage, l'observation visuelle du collecteur ne montre aucune différence entre le dépôt initial de nickel plaqué et celui qui a seulement été mis en contact avec le lithium du générateur. Cet exemple illustre la compatibilité des collecteurs de l'invention dans le cas du PP/Cu/Ni et du lithium. Ce cas est très intéressant pour la réalisation d'ensemble électrode-collecteur permettant la manipulation du lithium, le support du collecteur servant alors de support mécanique de l'ensemble monoface (PP/Cu/Ni/Li) ou biface Li/Ni/Cu/PP/Cu/Ni/Li. De plus, ces collecteurs et leurs ensemble collecteur/électrode sont particulièrement bien adaptés pour résoudre le problème majeur de la collection latérale de l'électrode de lithium par projection à la flamme (schoopage) avec des métaux usuels tels que le zinc. Tel qu'illustré aux FIGURES 5 et 6, le dépôt de zinc peut être effectué sur la marge conductrice plutôt que directement sur le revêtement de lithium. Le cas de l'ensemble biface est particulièrement intéressant sur le plan du cyclage du lithium, car nous avons observé que le lithium libre utilisé électrochimiquement sur ses deux faces conduit à des efficacités de redéposition inférieures aux performances d'un film de lithium de demi-épaisseur supporté sur nickel. Il est donc avantageux d'utiliser l'ensemble biface avec un support PP conducteur mince, notamment, 4 microns, au lieu d'un film de lithium libre d'épaisseur équivalente utilisé sur les deux faces.

EXEMPLE 6

Cet exemple est similaire en tous points à l'exemple 4, sauf en ce qui concerne la nature du film isolant utilisé, le procédé de métallisation du cuivre et la température de cyclage. Dans ce cas le film de polypropylène est remplacé par un film de polyester (Mylar*); le film est ensuite métallisé sous vide par pulvérisation cathodique de cuivre. Le maintient des taux d'utilisation des matériaux d'électrode en cyclage à 25°C, 80% d'utilisation après plus de 50 cycles montrent la possibilité d'utiliser des supports plastiques isolants moins inertes que le PP mais plus favorables à l'adhésion, grâce à la protection par le film de nickel électrodéposé. Ces films peuvent donc dans certains cas être utilisés dans l'environnement chimique d'un générateur au lithium, si un contact direct peut être évité entre les éléments incompatibles et si ni vapeur d'eau ni composé volatil ne sont émis et transferrés à l'intérieur du générateur aux températures normales d'utilisation.

EXEMPLE 7

Cet exemple est réalisé à partir de l'ensemble collecteur-cathode de l'exemple 2. On utilise une bande rectangulaire d'environ 10 cm de longueur par 3 cm de largeur que l'on découpe dans l'ensemble collecteur-électrode, dans la zone où le revêtement d'électrode est appliqué. La bande découpée est sélectionnée de façon à comporter deux plages conductrices identiques et une section transversale non-conductrice de 0,5 cm de largeur localisée au milieu de la bande rectangulaire. Un générateur est ensuite assemblé par transfert à 80°C de cet ensemble collecteur/électrode sur une demi-pile composée d'un électrolyte polymère de 30 microns d'épaisseur et d'un film de lithium de 20 microns supporté sur nickel. La surface de la demi-pile lithium/électrolyte est laissée légèrement en retrait vis-à-vis de la surface de l'ensemble collecteur-électrode de façon à permettre des contacts latéraux avec la surface du collecteur supporté.

* Marque de Commerce

La pile est ensuite complètement repliée en deux sur elle même dans la zone transversale non conductrice, de façon à conserver le support de propylène de la positive à l'extérieur. Cette pile est ensuite mise en cyclage sur plus de 50 cycles à 60°C à 100 µA/cm² sans évidence de malfonctionnement à la recharge, i.e. le rapport Coulombs chargés/ Coulombs déchargés est de 1,0. Une pile équivalente dont le collecteur Ni/Cu est conservé dans la zone de pliage, montre des signes d'inefficacité à la recharge, rapport de Coulombs en charge/Coulombs en décharge variant de 1,05 à 1,20, après une vingtaine de cycles, par suite de court circuits locaux dans la zone de pliage. Cet exemple illustre l'importance des collecteur de l'invention qui permettent, entre autres, le contrôle aisé des surfaces conductrices des collecteurs supportés et des ensembles collecteurs cathodes tels que mis en oeuvre à la FIGURE 4.

Il est entendu que l'invention n'est pas restreinte aux réalisations préférentielles données ci-dessus à titre purement illustratif mais sans caractère limitatif et que sa portée est définie uniquement par les revendications qui suivent.

## Revendications

1. Procédé de préparation d'un ensemble collecteur-électrode, à collection latérale, facile à manipuler et destiné à un générateur électrochimique à électrolyte polymère utilisant des électrodes fonctionnant par rapport aux ions alcalins ou alcalino-terreux, comprenant les étapes suivantes :

   - métallisation par dépôt sous vide, d'au moins un métal, sur au moins une face d'un film support isolant en résine synthétique, l'épaisseur du métal étant réglée entre environ 0,005 et 0,1 micron afin de donner un film métallisé offrant une conductivité électronique suffisante pour amorcer un dépôt électrochimique uniforme ;
   - dépôt électrochimique, d'au moins une couche métallique additionnelle, d'épaisseur totale comprise entre 0,1 et 4 microns, sur au moins une partie de la surface du film métallisé de façon à constituer un conducteur métallisé-plaqué, le métal de la couche métallique additionnelle déposée étant choisi pour sa compatibilité avec l'électrode correspondante du générateur ;
   - application d'un revêtement d'une électrode du générateur sur au moins une partie de la surface du collecteur supporté ainsi constitué de façon à assurer l'adhésion du matériau de l'électrode au film collecteur supporté.

2. Procédé selon la revendication 1, caractérisé en ce que la métallisation par dépôt sous vide s'effectue en continu.

3. Procédé selon la revendication 1 ou 2, caractérisé en ce que le dépôt électrochimique s'effectue en continu.

4. Procédé selon la revendication 1, caractérisé par le fait que le procédé de métallisation sous vide est choisi parmi les procédés de vaporisation thermochimiques simples, ou assistés.

5. Procédé selon la revendication 4, caractérisé en ce que la métallisation sous vide s'effectue par pulvérisation cathodique ou à faisceau d'électrons.

6. Procédé selon la revendication 1, caractérisé en ce que le film support isolant est une résine synthétique choisie pour sa compatibilité avec l'environnement d'un générateur comportant des électrodes fonctionnant par rapport aux ions alcalins ou alcalino-terreux et dont l'épaisseur varie entre 1 et 30 microns.

7. Procédé selon la revendication 6, dans lequel la résine synthétique est un film à base de polypropylène, de polyester, polysulfone ou de polyéthylène.

8. Procédé selon la revendication 1, caractérisé par le fait que la métallisation s'effectue avec des éléments compatibles avec le dépôt électrochimique, choisis parmi, le cuivre, le nickel, le fer, le molybdène, le chrome, le carbone, le zinc, l'argent, l'or ou leurs alliages.

9. Procédé selon la revendication 8, caractérisé en ce que la résistance par surface carrée desdits éléments varie entre 0,1 et 10 Ω.

10. Procédé selon la revendication 8, caractérisé par le fait que l'élément métallisé est un métal choisi parmi le cuivre, l'or ou l'argent ou leurs alliages.

11. Procédé selon la revendication 10, caractérisé en ce que la résistance par surface carrée dudit métal varie entre 0,1 et 10 Ω.

**12.** Procédé selon l'une quelconque des revendications 1 à 11 dans lequel le métal déposé électrochimiquement est choisi parmi le nickel, le fer, le chrome, le molybdène ou leurs alliages.

**13.** Procédé selon l'une quelconque des revendications 1 à 11 dans lequel la surface conductrice métallisée-plaquée ne recouvre que partiellement la surface du film support isolant.

**14.** Procédé selon l'une quelconque des revendications 1 à 11 dans lequel le film métallisé recouvert d'un dépôt électrochimique métallique ne recouvre que partiellement la surface du film support isolant de façon à laisser une marge non conductrice latérale représentant moins de 10% de la largeur du film support isolant.

**15.** Procédé selon la revendication 7 et 13 dans lequel le recouvrement partiel du film isolant par un revêtement conducteur métallisé-plaqué est obtenu par des procédés choisis parmi l'utilisation de masques latéraux lors de la métallisation, ou encore par des procédés basés sur l'ablation du revêtement conducteur métallisé ou métallisé-plaqué.

**16.** Procédé selon la revendication 15, caractérisé en ce que l'ablation du revêtement conducteur métallisé ou métallisé-plaqué s'effectue par usinage laser, par étincellage, par voie chimique ou mécanique.

**17.** Procédé selon la revendication 1 dans lequel on interrompt périodiquement le revêtement conducteur métallisé-plaqué dans le sens transversal du film par des bandes non-conductrices.

**18.** Procédé selon la revendication 17 dans lequel les bandes non-conductrices sont obtenues par ablation locale des couches conductrices métallisées ou métallisées-plaquées avant l'étape d'application d'un revêtement d'électrode au moyen de procédés laser, d'étincellage ou par voie chimique ou mécanique.

**19.** Procédé selon la revendication 1 dans lequel le matériau d'électrode appliqué sur le collecteur supporté est le lithium ou une anode à base de lithium.

**20.** Procédé selon la revendication 19 dans lequel le procédé d'application du revêtement de lithium est choisi parmi les procédés de lamination ou de pressage d'un film de lithium ou encore parmi les procédés de projection ou de mouillage par du lithium fondu.

**21.** Procédé selon la revendication 19 ou 20 dans lequel le film support isolant est à base de polypropylène ou de polyéthylène.

**22.** Procédé selon la revendication 1 dans lequel le matériau d'électrode appliqué sur le collecteur supporté est une cathode ou une anode composite liée par l'électrolyte polymère du générateur.

**23.** Procédé selon la revendication 22 dans lequel l'application du revêtement de la cathode ou de l'anode composite est obtenu par les procédés d'épandage sous forme de solution ou de produit fondu ou encore par un procédé de transfert d'un film adhésif d'une cathode ou d'une anode déjà élaborée.

**24.** Procédé selon les revendications 19, 20, 22 ou 23 dans lequel le revêtement d'électrode recouvre incomplètement la marge non-conductrice latérale du film support isolant.

**25.** Procédé selon les revendications 19, 20, 22 ou 23 dans lequel le revêtement d'électrode est appliqué de façon à recouvrir incomplètement la surface du collecteur métallisé-plaqué afin de définir une marge conductrice latérale permettant l'application d'une prise de contact latérale au bord de la métallisation-placage plutôt que sur le revêtement du matériau d'électrode lui-même.

**26.** Procédé selon l'une quelconque des revendications 1 à 11, 13, 15 à 20, 22 ou 23 dans lequel on interrompt le conducteur métallisé transversalement par des sections non conductrices obtenues par une démétallisation locale de la bande métallisée avant l'étape de dépôt électrochimique, la démétallisation étant obtenue par ablation du dépôt métallisé.

**27.** Procédé selon l'une quelconque des revendications 1 à 11, 13, 15 à 20, 22 ou 23, dans lequel on traite le film métallisé-plaqué en l'interrompant transversalement par des sections non-conductrices obtenues par une ablation du film métallisé-plaqué avant l'étape d'application du revêtement d'électrode, la démétallisation étant obtenue par ablation du dépôt métallisé par usinage au laser, par étincellage, par voie chimique ou mécanique.

28. Ensemble collecteur-électrode, à collection latérale, adapté aux générateurs électrochimiques films minces à électrolyte polymère et à leurs modes d'assemblages, comprenant les éléments suivants :

- un film support isolant en résine synthétique, d'épaisseur comprise entre 1 et 30 microns comprenant un dépôt métallisé obtenu par dépôt sous vide, sur au moins une face du support et sur au moins une partie de sa surface, dont l'épaisseur métallisée varie entre 0,005 et 0,1 micron et présente une résistance par surface carrée inférieure à 10 $\Omega$ ;
- un dépôt électrochimique d'au moins un métal, d'épaisseur totale comprise entre 0,1 et 4 microns, sur la totalité ou une partie de la surface ainsi métallisée dont la résistance électrique par surface carrée est inférieure à 1 $\Omega$, le dernier métal déposé étant choisi pour sa compatibilité avec l'électrode correspondante du générateur ;
- revêtement d'un matériau d'électrode adhésif au collecteur et au film support consistant en une anode ou une cathode du générateur dont l'épaisseur est comprise entre 1 et 200 microns.

29. Ensemble collecteur-électrode selon la revendication 28, caractérisé en ce que la résine synthétique est choisie parmi le polypropylène, un polyester, un polysulfone et le polyéthylène.

30. Ensemble collecteur-électrode selon la revendication 28, caractérisé en ce que le film support isolant est métallisé avec un élément choisi parmi le cuivre, le nickel, le fer, le molybdène, le chrome, le zinc, le carbone, l'argent, l'or et leurs alliages.

31. Ensemble collecteur-électrode selon la revendication 30, caractérisé en ce que le dépôt métallisé possède une résistance par surface carrée entre 0,1 et 10 $\Omega$.

32. Ensemble collecteur-électrode selon la revendication 31, caractérisé en ce que le dépôt métallisé est en cuivre, or ou argent.

33. Ensemble collecteur-électrode selon la revendication 29, caractérisé en ce que le métal constituant le dépôt électrochimique est choisi parmi le nickel, le fer, le chrome, le molybdène et leurs alliages.

34. Ensemble collecteur-électrode selon la revendication 29, caractérisé en ce que le film métallisé recouvert d'un dépôt électrochimique ne recouvre que partiellement la surface du film support isolant.

35. Ensemble collecteur-électrode selon la revendication 34, caractérisé en ce que ledit film métallisé comporte une marge non-conductrice latérale, représentant moins de 10% de la largeur du support, sur un bord opposé à un bord utilisé pour établir un contact de sortie du film métallisé.

36. Ensemble collecteur-électrode selon la revendication 34, caractérisé en ce que le revêtement conducteur métallisé plaqué est interrompu périodiquement dans le sens transversal du film par des bandes non-conductrices.

37. Ensemble collecteur-électrode selon l'une quelconque des revendications 28 à 36, caractérisé en ce que le matériau d'électrode est le lithium ou une anode à base de lithium.

38. Ensemble collecteur-électrode selon l'une quelconque des revendications 27 à 36, caractérisé en ce que le matériau d'électrode est une cathode composite liée par l'électrolyte polymère du générateur.

39. Ensemble collecteur-électrode selon la revendication 34, caractérisé en ce que l'électrode ne recouvre pas la marge non-conductrice latérale dudit film.

40. Ensemble collecteur-électrode selon la revendication 34, caractérisé en ce que ledit film métallisé recouvert d'un dépôt électrochimique comporte une marge conductrice latérale permettant l'application d'une prise de contact latérale indirecte sur le dépôt métallisé-plaqué plutôt que sur le revêtement du matériau d'électrode lui-même.

41. Ensemble collecteur-électrode selon la revendication 28 dans lequel le revêtement d'un matériau d'électrode est interrompu transversalement par des sections non-recouvertes localisées au niveau des sections non-conductrices du revêtement conducteur.

**42.** Ensemble collecteur-électrode selon la revendication 28 dans lequel le support isolant est recouvert sur chaque face d'un revêtement conducteur et d'un revêtement d'électrode de même nature et superposés de façon identique sur chaque face de façon à constituer un seul ensemble collecteur-électrode central biface lorsqu'un métal conducteur est appliqué sur les tranches latérales conductrices des deux ensembles collecteur-électrode supportés.

**43.** Ensemble collecteur-électrode selon la revendication 42, caractérisé en ce que le métal conducteur est le zinc.

**44.** Ensemble collecteur-électrode selon la revendication 42 dans lequel les revêtements d'électrode sont du lithium ou une anode à base de lithium.

**45.** Ensemble collecteur-électrode selon la revendication 41 constitué par une paire desdits collecteurs-électrodes supportés sur un même film support isolant comportant sur une face un ensemble collecteur-anode et sur l'autre face un ensemble collecteur-cathode disposés de façon à ce que leurs marges non-conductrices soient en opposition à chaque bord du film support et à permettre éventuellement une prise de contact électrique latérale des ensembles à leurs extrémités latérales conductrices.

**46.** Générateur au lithium à électrolyte polymère comportant au moins un des ensembles collecteur-électrode selon la revendication 41 et assemblé sous forme d'empilement ou d'enroulements plats ou cylindriques.

**47.** Générateur à électrolyte polymère sous forme d'un ensemble adhérent de films minces successifs caractérisé en ce que les deux faces externes dudit générateur correspondent aux supports isolants des ensembles collecteur-anode et collecteur-cathode réalisés selon la revendication 46; ces ensembles étant placés de façon à ce que les contacts latéraux puissent se faire aux extrémités latérales opposées dudit générateur; ce dernier étant produit et stocké sous forme d'enroulements temporaires et manipulés sans risque de court-circuit, les deux faces externes étant constituées de films isolants; les contacts électriques externes étant constitués d'addition de métal aux extrémités latérales de l'ensemble une fois ce dernier enroulé ou empilé dans sa forme définitive.

**48.** Générateur selon la revendication 47 comportant du côté de l'extrémité conductrice de l'ensemble collecteur-électrode un métal d'addition appliqué par pulvérisation ou sous forme de pâte conductrice.

**49.** Générateur selon la revendication 48 dans lequel le métal d'addition est le zinc ou ses alliages.

**50.** Générateur au lithium à électrolyte polymère comportant au moins un ensemble collecteur-électrode selon les revendications 41, 42, 43, 45, 46, 47, 48 ou 49 assemblés en repliant en zig-zag l'ensemble des films du générateur de façon à ce que les zones non-conductrices transversales du collecteur coincident avec les zones de pliages afin d'améliorer la fiabilité et les performances du générateur.

**51.** Générateur au lithium à électrolyte polymère comportant au moins un des ensembles collecteur-électrode selon l'une quelconque des revendications 28 à 36, 39 à 45.

**Patentansprüche**

**1.** Verfahren zur Herstellung einer Kollektor-Elektrode-Einheit mit seitlicher Ableitung, die leicht handzuhaben und für einen elektrochemischen Generator mit polymerem Elektrolyten vorgesehen ist, der Elektroden verwendet, die mit alkalischen und erdalkalischen Ionen arbeiten, umfassend folgende Schritte:

- Metallisieren mittels Ablagerung im Vakuum mindestens eines Metalls auf zumindest einer Seite eines isolierenden Kunstharz-Trägerfilms, wobei die Dicke des Metalls zwischen etwa 0,005 und 0,1 Mikron eingestellt ist, um eine Metallschicht mit einer zur Einleitung einer einheitlichen elektrochemischen Ablagerung ausreichenden Leitfähigkeit zu ergeben;

- elektrochemisches Ablagern mindestens einer zusätzlichen metallischen Schicht mit einer Gesamtdicke zwischen 0,1 und 4 Mikron auf zumindest einem Teil der metallisierten Filmoberfläche, sodaß ein metallisierter-plattierter Leiter gebildet wird, wobei das Metall der zusätzlichen abgelagerten Metallschicht im Hinblick auf seine Verträglichkeit mit der entsprechenden Generator-Elektrode gewählt ist;

- Aufbringen eines Überzuges einer Generator-Elektrode auf zumindest einem Teil der derart gebildeten getragenen Kollektor-Oberfläche, um die Haftung des Elektrodenmaterials an der getragenen Kollektorschicht zu sichern.

2. Verfahren nach Anspruch 1, **dadurch gekennzeichnet,** daß das Metallisieren durch Ablagerung im Vakuum kontinuierlich erfolgt.

3. Verfahren nach Anspruch 1 oder 2, **dadurch gekennzeichnet,** daß die elektrochemische Ablagerung kontinuierlich erfolgt.

4. Verfahren nach Anspruch 1, **dadurch gekennzeichnet,** daß das Verfahren des Metallisierens im Vakuum aus einfachen oder unterstützten thermochemischen Verdampfungsverfahren gewählt wird.

5. Verfahren nach Anspruch 4, **dadurch gekennzeichnet,** daß die Metallisierung im Vakuum durch Kathoden-Zerstäubung oder mit Elektronenstrahlen erfolgt.

6. Verfahren nach Anspruch 1, **dadurch gekennzeichnet,** daß der isolierende Trägerfilm ein Kunstharz ist, der im Hinblick auf seine Verträglichkeit mit der Umgebung eines Generators gewählt ist, welcher Elektroden enthält, die mit alkalischen oder erdalkalischen Ionen arbeiten und deren Dicke zwischen 1 und 30 Mikron variiert.

7. Verfahren nach Anspruch 6, **bei dem** das Kunstharz ein Film auf Polypropylen-, Polyester-, Polysulfon- oder Polyethylenbasis ist.

8. Verfahren nach Anspruch 1, **dadurch gekennzeichnet,** daß die Metallisierung mit Elementen erfolgt, die mit der elektrochemischen Ablagerung verträglich sind und welche aus Kupfer, Nickel, Eisen, Molybdän, Chrom, Kohlenstoff, Zink, Silber, Gold oder deren Legierungen gewählt sind.

9. Verfahren nach Anspruch 8, **dadurch gekennzeichnet,** daß der Widerstand pro Quadratfläche der Elemente zwischen 0,1 und 10 Ω variiert.

10. Verfahren nach Anspruch 8, **dadurch gekennzeichnet,** daß das metallisierte Element ein Metall ist, welches aus Kupfer, Gold oder Silber oder deren Legierungen gewählt ist.

11. Verfahren nach Anspruch 10, **dadurch gekennzeichnet,** daß der Widerstand pro Quadratfläche des Metalls zwischen 0,1 und 10 Ω variiert.

12. Verfahren nach einem der Ansprüche 1 bis 11, **bei welchem** das elektrochemisch abgelagerte Metall aus Nickel, Eisen, Chrom, Molybdän oder deren Legierungen gewählt ist.

13. Verfahren nach einem der Ansprüche 1 bis 11, **bei welchem** die leitfähige metallisierte-plattierte Fläche die Oberfläche des isolierenden Trägerfilms nur teilweise bedeckt.

14. Verfahren nach einem der Ansprüche 1 bis 11, **bei welchem** die mit einer elektrochemischen metallischen Auflage bedeckte metallisierte Schicht die Oberfläche des isolierenden Trägerfilms nur teilweise bedeckt, sodaß ein nichtleitender seitlicher Randbereich verbleibt, welcher weniger als 10 % der Breite des isolierenden Trägerfilms ausmacht.

15. Verfahren nach den Ansprüchen 7 und 13, **bei welchem** die teilweise Abdeckung des isolierenden Films durch einen leitfähigen metallisierten-plattierten Überzug durch Verfahren erhalten wird, welche ausgewählt sind aus der Verwendung seitlicher Masken während des Metallisierens oder auch durch Verfahren, die auf dem Entfernen des leitfähigen metallisierten oder metallisierten-plattierten Überzuges beruhen.

16. Verfahren nach Anspruch 15, **dadurch gekennzeichnet,** daß das Entfernen des leitfähigen metallisierten oder metallisierten-plattierten Überzuges durch Laserbearbeitung, Funkenerosion, auf chemischem oder mechanischem Weg erfolgt.

17. Verfahren nach Anspruch 1, **bei welchem** man den leitfähigen metallisierten-plattierten Überzug periodisch in Querrichtung zum Film durch nichtleitende Streifen unterbricht.

**18.** Verfahren nach Anspruch 17, **bei welchem** die nichtleitenden Streifen durch örtliches Entfernen der leitfähigen, metallisierten oder metallisierten-plattierten Schichten vor dem Schritt des Aufbringens eines Elektrodenüberzuges mittels Laserverfahren, Funkenerosion, auf chemischen oder mechanischen Weg erhalten werden.

**19.** Verfahren nach Anspruch 1, **bei welchem** das auf dem getragenen Kollektor aufgebrachte Elektrodenmaterial Lithium oder eine Anode auf Lithiumbasis ist.

**20.** Verfahren nach Anspruch 19, **bei welchem** das Verfahren des Aufbringens des Lithium-Überzuges aus den Verfahren der Laminierung oder des Aufpressens einer Lithiumschicht oder auch aus den Verfahren des Besprühens oder des Benetzens mit flüssigem Lithium gewählt ist.

**21.** Verfahren nach Anspruch 19 oder 20, **bei welchem** der isolierende Trägerfilm auf Polypropylen oder Polyethylen basiert.

**22.** Verfahren nach Anspruch 1, **bei welchem** das Elektrodenmaterial, das auf den getragenen Kollektor aufgebracht wird, eine Kathode oder eine zusammengesetzte Anode ist, die mit dem polymeren Elektrolyten des Generators in Kontakt steht.

**23.** Verfahren nach Anspruch 22, **bei welchem** das Aufbringen des Überzuges der Kathode oder der zusammengesetzten Anode durch die Verfahren des Besprühens mit einer Lösung oder einem geschmolzenen Erzeugnis oder auch durch ein Verfahren der Übertragung eines haftenden Films einer Kathode oder einer bereits vorbereiteten Anode erfolgt.

**24.** Verfahren nach den Ansprüchen 19, 20, 22 oder 23, **bei welchem** der Elektrodenüberzug den nichtleitenden seitlichen Randbereich des isolierenden Trägerfilms unvollständig bedeckt.

**25.** Verfahren nach den Ansprüchen 19, 20, 22 oder 23, **bei welchem** der Elektrodenüberzug derart aufgebracht wird, daß er die Oberfläche des metallisierten plattierten Kollektors unvollständig bedeckt, um einen leitfähigen seitlichen Randbereich festzulegen, der das Aufbringen eines seitlichen Anschlusses am Rand der Metallisierung-Plattierung anstatt auf dem Überzug des Elekrodenmaterials selbst ermöglicht.

**26.** Verfahren nach einem der Ansprüche 1 bis 11, 13, 15 bis 20, 22 oder 23, **bei welchem** man den metallisierten Leiter in Querrichtung durch nichtleitende Abschnitte unterbricht, die durch eine örtliche Entmetallisierung des metallisierten Streifens vor dem Schritt der elektrochemischen Ablagerung erhalten werden, wobei die Entmetallisierung durch Entfernen der metallisierten Ablagerung erhalten wird.

**27.** Verfahren nach einem der Ansprüche 1 bis 11, 13, 15 bis 20, 22 oder 23, **bei welchem** man den metallisierten-plattierten Film behandelt, indem man ihn in Querrichtung durch nichtleitende Abschnitte unterbricht, welche durch Entfernen der metallisierten-plattierten Schicht vor dem Schritt des Aufbringens des Elektrodenüberzuges erhalten werden, wobei die Entmetallisierung durch Entfernen der metallisierten Ablagerung durch Laserbearbeitung, durch Funkenerosion, auf chemischem oder mechanischem Weg erfolgt.

**28.** Kollektor-Elektrode-Einheit mit seitlicher Ableitung, welche an elektrochemische Dünnfilm-Generatoren mit polymerem Elektrolyten und an deren Aufbauformen angepaßt ist, umfassend die folgenden Elemente:

- ein isolierender Trägerfilm aus Kunstharz von einer Dicke zwischen 1 und 30 Mikron, der eine metallisierte Ablagerung enthält, welche durch Aufbringen im Vakuum auf mindestens einer Seite des Trägers und auf zumindest einem Teil seiner Fläche erhalten ist, deren Dicke zwischen 0,005 und 0,1 Mikron variiert und die einen Widerstand pro Quadratfläche von weniger als 10 $\Omega$ aufweist;

- eine elektrochemische Ablagerung mindestens eines Metalls von einer Gesamtdicke zwischen 0,1 und 4 Mikron auf der Gesamtheit oder einem Teil der auf diese Weise metallisierten Fläche, deren elektrischer Widerstand pro Quadratfläche unter 1 $\Omega$ liegt, wobei das zuletzt aufgebrachte und abgelagerte Metall im Hinblick auf seine Verträglichkeit mit der entsprechenden Elektrode des Generators gewählt ist;

- Überzug mit einem Elektrodenmaterial, das am Kollektor und am Trägerfilm haftet, aus einer Anode oder einer Kathode des Generators gebildet ist, und dessen Dicke zwischen 1 und 200 Mikron liegt.

EP 0 533 576 B1

29. Kollektor-Elektrode-Einheit nach Anspruch 28, **dadurch gekennzeichnet,** daß das Kunstharz aus Polypropylen, einem Polyester, einem Polysulfon oder Polyethylen gewählt ist.

30. Kollektor-Elektrode-Einheit nach Anspruch 28, **dadurch gekennzeichnet,** daß der isolierende Trägerfilm mit einem Element metallisiert ist, welches aus Kupfer, Nickel, Eisen, Molybdän, Chrom, Zink, Kohlenstoff, Silber, Gold oder deren Legierungen gewählt ist.

31. Kollektor-Elektrode-Einheit nach Anspruch 30, **dadurch gekennzeichnet,** daß die metallisierte Ablagerung einen Widerstand pro Quadratfläche zwischen 0,1 und 10 $\Omega$ aufweist.

32. Kollektor-Elektrode-Einheit nach Anspruch 31, **dadurch gekennzeichnet,** daß die metallisierte Ablagerung aus Kupfer, Gold oder Silber besteht.

33. Kollektor-Elektrode-Einheit nach Anspruch 29, **dadurch gekennzeichnet,** daß das Metall, welches die elektrochemische Ablagerung bildet, aus Nickel, Eisen, Chrom, Molydän und deren Legierungen gewählt ist.

34. Kollektor-Elektrode-Einheit nach Anspruch 29, **dadurch gekennzeichnet,** daß die metallisierte Schicht, die von einer elektrochemischen Ablagerung bedeckt ist, die Oberfläche des isolierenden Trägerfilms nur teilweise bedeckt.

35. Kollektor-Elektrode-Einheit nach Anspruch 34, **dadurch gekennzeichnet,** daß der metallisierte Film einen nichtleitenden seitlichen Randbereich umfaßt, der weniger als 10 % der Breite des Trägers ausmacht und sich an einem Rand befindet, der einem zur Herstellung eines Ausgangskontakts der metallisierten Schicht verwendeten Rand gegenüberliegt.

36. Kollektor-Elektrode-Einheit nach Anspruch 34, **dadurch gekennzeichnet,** daß der leitfähige metallisierte plattierte Überzug periodisch in Querrichtung zum Film durch nichtleitende Streifen unterbrochen ist.

37. Kollektor-Elektrode-Einheit nach einem der Ansprüche 28 bis 36, **dadurch gekennzeichnet,** daß das Elektrodenmaterial Lithium oder eine Anode auf Lithiumbasis ist.

38. Kollektor-Elektrode-Einheit nach einem der Ansprüche 27 bis 36, **dadurch gekennzeichnet,** daß das Elektrodenmaterial eine zusammengesetzte Kathode ist, die mit dem polymeren Elektrolyten des Generators in Kontakt steht.

39. Kollektor-Elektrode-Einheit nach Anspruch 34, **dadurch gekennzeichnet,** daß die Elektrode den nichtleitenden seitlichen Randbereich des Films nicht bedeckt.

40. Kollektor-Elektrode-Einheit nach Anspruch 34, **dadurch gekennzeichnet,** daß der metallisierte Film, der mit einer elektrochemischen Ablagerung bedeckt ist, einen leitfähigen seitlichen Randbereich umfaßt, der das Anbringen eines seitlichen indirekten Anschlusses auf der metallisierten-plattierten Ablagerung anstatt auf dem Überzug des Elektrodenmaterials selbst ermöglicht.

41. Kollektor-Elektrode-Einheit nach Anspruch 28, **bei welchem** der Überzug eines Elektrodenmaterials in Querrichtung durch nicht bedeckte Abschnitte unterbrochen ist, die sich auf Höhe der nichtleitenden Abschnitte des leitfähigen Überzuges befinden.

42. Kollektor-Elektrode-Einheit nach Anspruch 28, **bei welchem** der isolierende Träger auf jeder Seite von einem leitfähigen Überzug und einem Elektrodenüberzug gleicher Art bedeckt ist, welche auf jeder Seite in gleicher Weise so überlagert sind, daß sie eine einzige zentrale zweiseitige Kollektor-Elektrode-Einheit bilden, wenn ein leitfähiges Metall auf die seitlichen leitfähigen Stirnflächen der beiden getragenen Kollektor-Elektrode-Einheiten aufgebracht wird.

43. Kollektor-Elektrode-Einheit nach Anspruch 42, **dadurch gekennzeichnet,** daß das leitfähige Metall Zink ist.

44. Kollektor-Elektrode-Einheit nach Anspruch 42, **bei welchem** die Elektrodenüberzüge aus Lithium gebildet oder eine Anode auf Lithiumbasis sind.

45. Kollektor-Elektrode-Einheit nach Anspruch 41, **welcher aus** einem Paar der Kollektor-Elektroden besteht, die von einem einzigen isolierenden Trägerfilm getragen werden, welcher auf einer Seite eine Kollektor-Anoden-Einheit und auf der anderen Seite eine Kollektor-Kathoden-Einheit umfaßt, die so angeordnet sind, daß ihre nichtleitenden Randbereiche sich an jedem Rand des Trägerfilms gegenüberliegen, und daß gegebenenfalls ein seitlicher elektrischer Anschluß der Einheiten an ihren seitlichen leitfähigen Enden möglich ist.

**46.** Lithium-Generator mit polymerem Elektrolyten, **umfassend** wenigstens eine der Kollektor-Elektrode-Einheiten nach Anspruch 41 und zusammengesetzt in Form eines Stapels oder einer flachen oder zylindrischen Wicklung.

**47.** Generator mit polymerem Elektrolyten in Form einer haftenden Einheit aus aufeinanderfolgenden Dünnfilmen, **dadurch gekennzeichnet,** daß die beiden Außenseiten des Generators den isolierenden Trägern der nach Anspruch 46 ausgeführten Kollektor-Anoden- und Kollektor-Kathoden-Einheiten entsprechen, wobei diese Einheiten so angeordnet sind, daß die seitlichen Kontaktierung an den seitlichen, sich gegenüberliegenden Enden des Generators erfolgen kann, wobei dieser letztere in Form von zeitweiligen Wicklungen hergestellt und gelagert und ohne Kurzschlußgefahr gehandhabt werden kann, wobei die beiden Außenseiten aus isolierenden Filmen bestehen, wobei die äußeren elektrischen Anschlüsse durch Hinzufügen von Metall an den seitlichen Enden der Einheit gebildet sind, sobald dieser letztere in seiner endgültigen Form gewickelt oder gestapelt ist.

**48.** Generator nach Anspruch 47, der auf der Seite des leitfähigen Endes der Kollektor-Elektrode-Einheit ein Zusatzmetall enthält, welches mittels Zerstäubung oder in Form von Leitpaste aufgebracht wird.

**49.** Generator nach Anspruch 48, **bei welchem** das Zusatzmetall Zink oder dessen Legierungen ist.

**50.** Lithium-Generator mit polymerem Elektrolyten, welcher mindestens eine Kollektor-Elektrode-Einheit nach den Ansprüchen 41, 42, 43, 45, 46, 47, 48 oder 49 enthält, die durch zickzackförmiges Falten der Einheit der Filme des Generators derart aufgebaut ist, daß die nichtleitenden Querbereiche des Kollektors mit den Faltungsbereichen zusammenfallen, um die Zuverlässigkeit und das Betriebsverhalten des Generators zu verbessern.

**51.** Lithium-Generator mit polymerem Elektrolyten, welcher mindestens eine der Kollektor-Elektrode-Einheiten nach einem der Ansprüche 28 bis 36, 39 bis 45 umfaßt.

## Claims

**1.** A method of preparing an electrode-and-collector unit that provides lateral collection and that is easy to handle, for use in an electrochemical cell having a polymer electrolyte and using electrodes operating relative to alkali or alkaline-earth ions, the method comprising the following steps:

metallizing, by vacuum plating, with at least one metal, of at least one face of an insulating support film made of a synthetic resin, the thickness of the metal being set to in the range 0.005 microns to 0.1 microns so as to give a metallized film offering electron conductivity that is high enough to prime uniform electroplating;

electroplating with at least one additional metal layer, of total thickness lying in the range 0.1 microns to 4 microns, of at least a portion of the surface of the metallized film so as to constitute a metallized and electroplated conductor, the metal of the deposited additional metal layer being chosen to be compatible with the corresponding electrode of the cell; and

applying a covering of an electrode of the cell to at least a portion of the surface of the supported collector constituted in this way, in such manner as to ensure that the material of the electrode adheres to the supported collector film.

**2.** A method according to claim 1, characterized in that the metallizing by vacuum plating is performed continuously.

**3.** A method according to claim 1 or 2, characterized in that the electroplating is performed continuously.

**4.** A method according to claim 1, characterized by the fact that the method of metallizing by vacuum plating is chosen from unassisted vapor deposition methods and assisted vapor deposition methods.

**5.** A method according to claim 4, characterized in that the metallizing by vacuum plating is performed by cathode sputtering or electron beam sputtering.

**6.** A method according to claim 1, characterized in that the insulating support film is made of a synthetic resin chosen to be compatible with the environment of a cell including electrodes operating relative to alkali or alkaline-earth ions, and its thickness lies in the range 1 micron to 30 microns.

**7.** A method according to claim 6, in which the synthetic resin is a film based on polypropylene, polyester, polysulfone, or polyethylene.

**8.** A method according to claim 1, characterized by the fact that the metallizing is performed with elements that are compatible with the electroplating, and that are chosen from copper, nickel, iron, molybdenum, chromium, carbon, zinc, silver, gold, or their alloys.

**9.** A method according to claim 8, characterized in that the surface resistance per square of said elements lies in the range $0.1\ \Omega$ to $10\ \Omega$.

**10.** A method according to claim 8, characterized by the fact that the metallizing element is a metal chosen from copper, gold, or silver, or their alloys.

**11.** A method according to claim 10, characterized in that the surface resistance per square of said metal lies in the range $0.1\ \Omega$ to $10\ \Omega$.

**12.** A method according to any one of claims 1 to 11, in which the electroplating metal is chosen from nickel, iron, chromium, molybdenum, or their alloys.

**13.** A method according to any one of claims 1 to 11, in which the metallized and electroplated conductive surface covers only part of the area of the insulating support film.

**14.** A method according to any one of claims 1 to 11, in which the metallized film covered with electroplated metal covers only part of the area of the insulating support film so as to leave a non-conductive lateral margin representing less than 10% of the width of the insulating support film.

**15.** A method according to claims 7 and 13, in which coating only part of the insulating film with a conductive coating is obtained by methods chosen from using lateral masks during metallizing, or from using ablation of the conductive coating after metallizing or after electroplating.

**16.** A method according to claim 15, characterized in that the ablation of the conductive coating is performed by laser machining, electron discharge machining, or by mechanical or chemical methods.

**17.** A method according to claim 1, in which the conductive coating is interrupted periodically by non-conductive strips extending transversely across the film.

**18.** A method according to claim 17, in which the non-conductive strips are obtained by local ablation of the metallized or metallized-and-electroplated conductive layers prior to the step in which an electrode covering is applied, the local ablation being performed by means of laser machining, electron discharge machining, or by mechanical or chemical methods.

**19.** A method according to claim 1, in which the electrode material applied to the supported collector is lithium or an anode based on lithium.

**20.** A method according to claim 19, in which the method of applying the lithium coating is chosen from the methods of rolling or pressing a film of lithium, or from the methods of spraying or wetting with molten lithium.

**21.** A method according to claim 19 or 20, in which the insulating support film is based on polypropylene or on polyethylene.

**22.** A method according to claim 1, in which the electrode material applied to the supported collector is a composite anode or cathode bonded by the polymer electrolyte of the cell.

**23.** A method according to claim 22, in which the covering of the composite anode or cathode is obtained by the methods of spreading in solution form or in molten form, or by a method of transferring an adhesive film from an already made anode or cathode.

24. A method according to any one of claims, 19, 20, 22, or 23, in which the electrode covering does not cover all of the non-conductive lateral margin of the insulating support film.

25. A method according to any one of claims 19, 20, 22, or 23, in which the electrode covering is applied so as not to cover all of the surface of the metal-coated collector so as to define a conductive lateral margin enabling a lateral contact terminal to be applied to the edge of the metal coating rather than to the covering of the electrode material itself.

26. A method according to any one of claims 1 to 11, 13, 15 to 20, 22, or 23, in which the metallized conductor is interrupted by transversely extending non-conductive sections obtained by locally stripping the metal from the metallized strip prior to the electroplating step, the metal-stripping being obtained by ablation of the metallized deposit.

27. A method according to any one of claims 1 to 11, 13, 15 to 20, 22 or 23, in which the film of metal coating is treated by interrupting it by means of transversely extending non-conductive sections obtained by ablation of the film of metal coating prior to the electrode covering application step, the metal-stripping being obtained by ablation of the metal coating by laser machining, by electron discharge machining, or by chemical or mechanical methods.

28. A lateral-collection electrode-and-collector unit adapted to thin-film electrochemical cells having polymer electrolytes and to their assembly modes, the electrode-and-collector unit comprising the following elements:

an insulating support film of synthetic resin of thickness lying in the range 1 micron to 30 microns provided with a metallized coating obtained by vacuum plating on at least one face of the support and over at least a portion of its area, the thickness of the metallized coating lying in the range 0.005 microns to 0.1 microns, and its surface resistance per square being less than 10 $\Omega$;

an electroplated deposit of at least one metal, of total thickness lying in the rang 0.1 microns to 4 microns, over all or part of the metallized surface, the surface electrical resistance per square of the deposit being less than 1 $\Omega$, the last-deposited metal being chosen to be compatible with the corresponding electrode of the cell; and

a covering of an electrode material adhering to the collector and to the support film, and consisting of an anode or a cathode of the cell, the thickness of the covering lying in the range 1 micron to 200 microns.

29. An electrode-and-collector unit according to claim 28, characterized in that the synthetic resin is chosen from polypropylene, a polyester, a polysulfone, and polyethylene.

30. An electrode-and-collector unit according to claim 28, characterized in that the insulating support film is metallized with an element chosen from copper, nickel, iron, molybdenum, chromium, zinc, carbon, silver, gold, or their alloys.

31. An electrode-and-collector unit according to claim 30, characterized in that the metallized coating has a surface resistance per square lying in the range 0.1 $\Omega$ to 10 $\Omega$.

32. An electrode-and-collector unit according to claim 31, characterized in that the metallized coating is made of copper, or of silver.

33. An electrode-and-collector unit according to claim 29, characterized in that the metal constituting the electroplated deposit is chosen from nickel, iron, chromium, molybdenum, and their alloys.

34. An electrode-and-collector unit according to claim 29, characterized in that the metallized film coated with an electroplated deposit covers only part of the surface of the insulating support film.

35. An electrode-and-collector unit according to claim 34, characterized in that said metallized film is provided with a non-conductive lateral margin representing less than 10% of the width of the support, on an edge opposite from an edge used to establish contact for output from the metallized film.

36. An electrode-and-collector unit according to claim 34, characterized in that the conductive metal coating is interrupted periodically by non-conductive strips extending transversely across the film.

37. An electrode-and-collector unit according to any one of claims 28 to 36, characterized in that the electrode material is lithium or an anode based on lithium.

38. An electrode-and-collector unit according to any one of claims 27 to 36, characterized in that the electrode material is a composite cathode bonded by the polymer electrolyte of the cell.

39. An electrode-and-collector unit according to claim 34, characterized in that the electrode does not cover the non-conductive lateral margin of said film.

40. An electrode-and-collector unit according to claim 34, characterized in that said metallized film coated with an electroplated deposit is provided with a conductive lateral margin enabling an indirect lateral contact terminal to be applied to the metal coating rather than to the covering of the electrode material itself.

41. An electrode-and-collector unit according to claim 28, in which the covering of an electrode material is interrupted by transversely extending non-covered sections located on the non-conductive sections interrupting the conductive coating.

42. An electrode-and-collector unit according to claim 28, in which the insulating support is coated on each face with a conductive coating and with an electrode covering of the same type and superposed identically on each face so as to constitute a single two-face central electrode-and-collector unit when a conductive metal is applied to the conductive lateral ends of the two supported electrode-and-collector units.

43. An electrode-and-collector unit according to claim 42, in which the conductive metal is zinc.

44. An electrode-and-collector unit according to claim 42, in which the electrode coverings are lithium or an anode based on lithium.

45. An electrode-and-collector unit according to claim 41, constituted by a pair of said electrodes-and-collectors supported on a common insulating support film provided with an anode-and-collector unit on one face, and a cathode-and-collector unit on the other face, which units are disposed so that their non-conductive margins are at opposite edges of the support film, and so as optionally to enable lateral electrical contact terminals to be provided at their conductive lateral ends.

46. A lithium cell having a polymer electrolyte, including at least one electrode-and-collector unit according to claim 41, and assembled in the form of a stack or of flat or cylindrical windings.

47. A polymer-electrolyte cell in the form of an adhesive assembly of successive thin films, said cell being characterized in that the two external faces of said cell correspond to the insulating supports of anode-and-collector and cathode-and-collector units implemented according to claim 46, which units are placed so that the lateral contacts can be provided at the opposite lateral ends of said cell, which cell is produced and stored in the form of temporary windings handled without any danger of short-circuiting, since the two external faces are constituted by insulating films, the external electrical contacts being constituted by adding metal to the lateral ends of the unit once it has been wound or stacked in its final form.

48. A cell according to claim 47, provided, at the conductive end of the electrode-and-collector unit, with an additional metal applied by spraying or in the form of a conductive paste.

49. A cell according to claim 48, in which the additional metal is zinc or alloys thereof.

50. A lithium cell having a polymer electrolyte, and including at least one electrode-and-collector unit according to any one of claims 41, 42, 43, 45, 46, 47, 48, or 49 assembled by folding the entire set of films of the cell in a zigzag configuration so that the transversely extending non-conductive zones of the collector coincide with the fold zones so as to improve the reliability and the performance of the cell.

51. A lithium cell having a polymer electrolyte and including at least one electrode-and-collector unit according to any one of claims 28 to 36, and 39 to 45.

# FIGURE 1

# FIGURE 2

# FIGURE 3

# FIGURE 4

# FIGURE 5

# FIGURE 6